# EUROPEAN PATENT APPLICATION

(11) **EP 0 857 775 A2**
(43) Date of publication of application: **12.08.1998**
(21) Application number: 97107476.0
(22) Date of filing: 06.05.1997
(51) Int. Cl.: C10B 53/02, C10B 53/00, C02F 11/00

(54) **Method of carbonizing an organic water containing substance**

(30) Priority: 06.02.1997 JP 38301/97
(71) Applicant: Okabe, Masaki, Otsu-shi, Shiga-ken (JP)
(72) Inventor: Yoshida, Yutaka, Nagano-shi, Nagano-ken (JP); Okabe, Masaki, Otsu-shi, Shiga-ken (JP); Ozawa, Masakatsu, Fujieda-shi, Shizuoka-ken (JP)
(74) Representative: Körner, Ekkehard, Dipl.-Ing.

(57) **Abstract**

A method of continuously producing a carbide from an organic substance containing a moisture is proposed to recycle said organic substance which has usually been thrown away as wastes. The method comprises a dewatering process for removing the water from the moisture containing material, a moisture adjustment process for further removing the water from the dewatered cake, and a carbonization process for continuously carbonizing the moisture adjusted material. During the moisture adjustment process, a carbide produced at the carbonization process is mixed in the dewatered cake to remove the moisture therefrom.

## Description

### Detailed Description of the Invention

The present invention relates to a method of continuously producing a carbide from an organic substance containing water.

The water-containing organic substances such as lees of wine, sprits and beer, or sludge cakes are partly recycled as compost or burned to be buried in the ground, but most of them are thrown away in the sea or ground as they are. Production of the compost, however, is very costly because it requires an expensive device for deodorizing a bad smell generated during the fermentation process and, furthermore, it is inefficient because the compost thus produced decreases in volume by only 10% to 20%. On the other hand, to burn the organic substances is also very costly and not practical because it needs a great amount of heat to burn off the substances containing more than 90% water. Thus, the above-mentioned substances are mostly thrown away in the sea without being processed at all.

Another known processing method is carbonization of the organic substances. By a conventional method, the organic substances are carbonized by an incomplete combustion or by a continuous carbonization under 500°C. But, this method produces a great quantity of an air-polluting and malodorous smoke and therefore requires a device for processing the smoke. Further, the carbide thus produced by the conventional method is of a high volatility and therefore has a limited field of application.

According to the present invention, there is provided a method of continuously producing a carbide from the water-containing organic substances. An object thereof is to recycle them which have been usually thrown away as wastes.

Means proposed by the invention for solving the problems comprises: a pressing process for removing water from a material; a moisture adjustment process for further removing water from the dewatered cake; and a carbonization process for carbonizing the moisture-adjusted material, said moisture adjustment process including the step of mixing a carbide formed by said carbonization process.

The present invention can produce the carbide by carbonizing the organic substances which have been unprocessed and discarded in the sea, thereby preventing the environmental pollution and enabling the recycling of sources.

Fig. 1 is a block diagram illustrating the processes of the invention.

Fig. 2 is a flow chart showing the whole devices.

Fig. 3a is a sectional view showing a furnace of a carbonizing device, and Fig. 3b is a view taken along the line b-b thereof.

Fig. 4 is a graph showing the percentage of yield in contrast with the carbonization temperature.

Fig. 5 is a graph showing the relationship between the carbonization temperature and the carbonizing period.

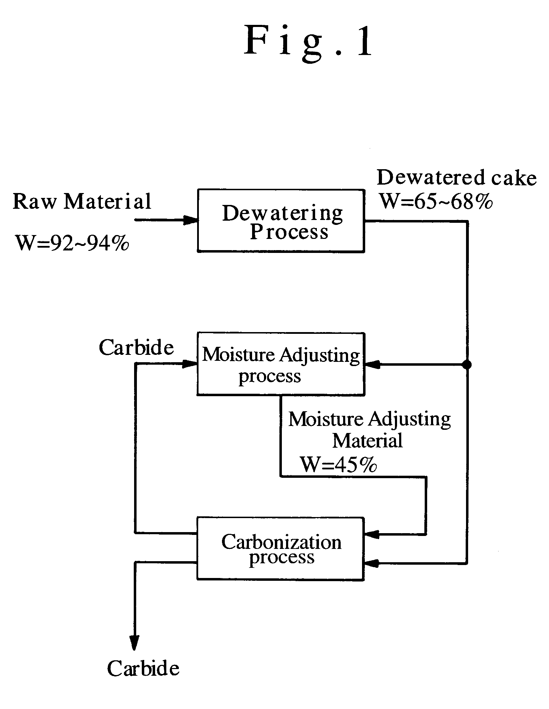

As shown in Fig. 1, the invention comprises a dewatering process for removing water by a pressing machine from a raw material such as the lees of wine, sprits, beer or the sludge cake; a moisture adjusting process for removing the moisture from the dewatered cake; and a carbonization process for continuously carbonizing the moisture adjusted material. The dewatered cake from the dewatering process can be carbonized without the moisture adjustment, but preferably after the moisture adjusting process.

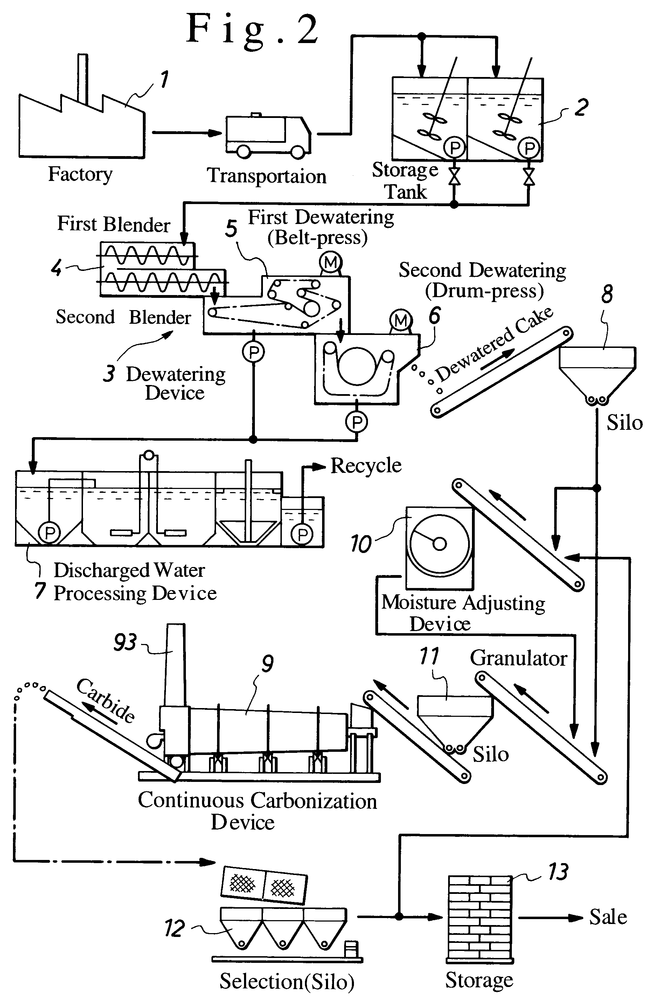

Referring to Fig. 2, the raw material discharged from a factory 1 is gathered into a storage tank 2, wherein the average moisture percentage is between 92% and 94%.

The raw material in the storage tank 2 is sent by a pump to a dewatering device 3, by which the moisture percentage is reduced to between 65% and 68% on average. The dewatering device 3 consists of a stirrer 4, and first and second dewatering means, 5 and 6, respectively. The stirrer 5 ,for mixing the material with a coagulant, comprises first and second blenders of a screw-structure. The type and amount of the coagulant to be injected differ according to the kind of the material to be processed, therefore the detailed description about the coagulant is omitted herein. The first dewatering means 5 employing a belt-press type machine creates a low-pressure dewatering area while the second means 6 creates a high-pressure dewatering area with use of a drum-press type machine. The combination of the two means 5 and 6 is not the scope of the invention.

The dewatering machine of the present invention is as disclosed in Japanese Patent Nos. 2127055, 907864 and 926951.

The filtrate separated by the dewatering device 3 is sent to a discharged water processing device 7 to be recycled as a water for industrial purpose.

Dewatered cake coming from the device 3 is gathered into a silo 8, from which the cake is partly sent to a carbonization device 9 and the other part to a moisture adjustment device 10. The device 10 is to process the cake prior to the carbonization by adjusting the moisture of the cake to about 45%. In the embodiment, a carbide produced by the invention is mixed into the cake to dehydrate the moisture in the cake, thereby accelerating the carbonization speed.

Although the cake itself has a odor, the deodorization of the mixed carbide weakens the smell. Therefore, the cake and carbide mixture can be utilized as a fertilizer or a soil conditioner without the carbonization process.

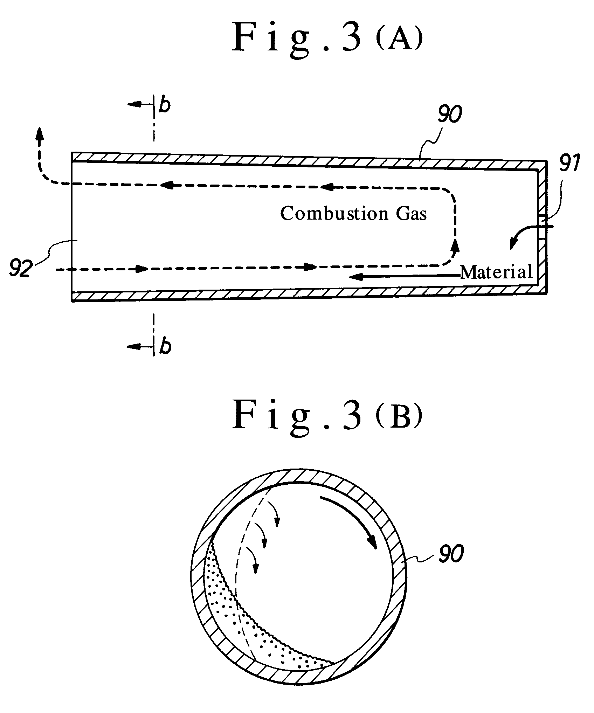

The moisture adjusted material may be directly sent to a silo 11, but preferably after being granulated, and thereafter to a carbonization device 9. As shown in Fig. 3, the carbonization device 9 has an inner-tapered furnace 90 mounted rotatable. The furnace has an inlet 91 at the smaller diameter portion thereof, from which the material is put in the furnace, and an outlet 92 is provided at the larger diameter portion. A burner and a blower, not shown, are mounted at the outlet side. When the moisture adjusted material is injected in the furnace 90 thought the inlet 91, the material are automatically sent toward the outlet 92 while being stirred. The carbonization device 9 is as disclosed in Japanese Patent No. 2549481.

The moisture adjusted material becomes dry by getting in contact with the inner wall of the rotating furnace 90, and burns by emitting a volatile gas. An intermediate combustion atmosphere is formed in which such an amount of air is supplied to cause neither incineration nor incomplete combustion. For this purpose, the blower is controlled to blow a minimum amount of air to the most violent combustion section in the atmosphere so as to prevent the incineration of the material. The carbide thus produced is taken out of the furnace and instantly cooled under the normal temperature, whereby the volatile matter in the carbide is volatilized completely and a porous carbide of a good quality is produced. Cooling the carbide again makes it into the most stable condition.

Inside of the tapered furnace 90, an air flow from the outlet side of a larger diameter is naturally drawn toward the inlet side and then the outlet side, thereby causing a secondary combustion to an exhaust, such as combustion gas, odor and smoke as generated during the combustion period, by letting it pass again through the hottest section in the furnace where the carbide material is burning. Consequently, the exhaust gas becomes odorless and smokeless.

The amount of material to be injected in the furnace 90 is adjusted according to the degree of granulation and the percentage of moisture. Control of the revolution of the furnace and the injected amount of the material is crucial because raising the combustion temperature in the furnace 90 for carbonization at a high temperature enables the continuous production of a porous carbide of a little volatility.

Exhaust heat emitted at the time of combustion can be recovered for use. A heat exchanger, for example a water-cooled type, is installed at the bottom of a chimney 93 for discharging the exhaust gas, so as to lower the temperature of said gas and at the same time radiate the heat ,by a radiator, from a cooling water which is as high as about 80°C to 100°C. Radiated heat source can be used for preliminary drying of the material to be carbonized. The odor and vapor produced by the preliminary drying are recovered to be fed into the furnace for deodorization and vaporization before they are discharged in the air.

The carbide produced by the carbonization device 9 is accommodated in a carbide silo 12, where the sorting is made for a final product 13. As described above, a part of the carbide is supplied to the moisture adjusting device. 10.

### Experiment of Production of Carbide

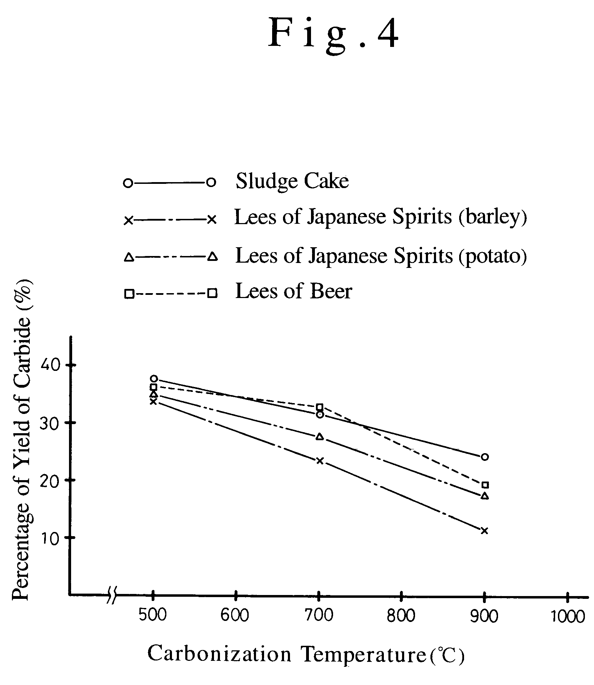

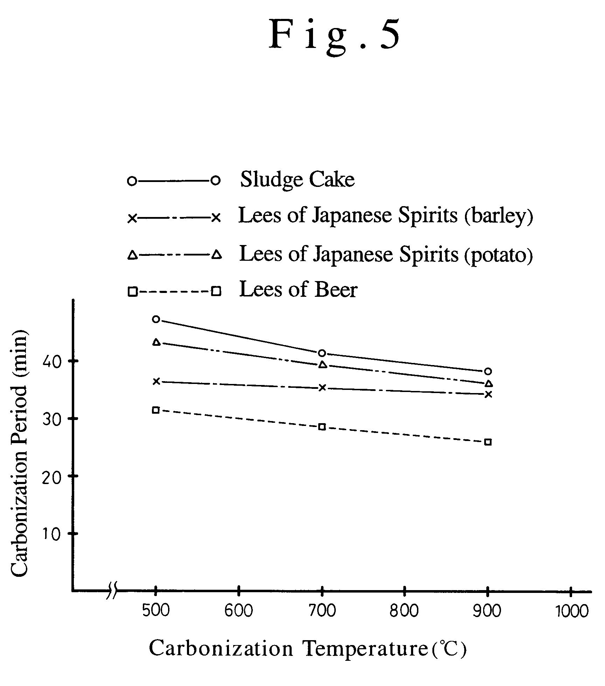

Figs. 4 and 5 show the examples of experiment for carbonization process regarding the dewatered sludge cake, the lees of Japanese distilled spirit, i.e. *shochu* (made from a barley and a potato) and the lees of beer.

Fig. 4 indicates the yield percentage of carbide against the carbonization temperature, and Fig. 5 indicates the relationship between the carbonization temperature and the carbonization period. As the carbonization temperature rises, the percentage of yield lowers with the lowering degree being more remarkable between 700°C and 900°C rather than 500°C to 700°C.

Referring to the relationship between the temperature and period for carbonization, it takes less time with the temperature rising, but the temperature between 700°C and 900°C is not necessarily a factor for shortening the carbonization period. As a result, it turned out that the temperature between 500°C and 700°C can yield a large amount of carbide while saving the fuel. In Fig. 4, the percentage of yield shows the ratio, in total dry quantity, of the produced carbide to the material.

The carbide produced by the invention is applicable in a various fields as a material for a medical mattress, a soil conditioner, a water purifier, an freshness keeping agent for vegetable, a building material, a livestock feed, a compost, a deodorant.

## Claims

1. A method of producing a carbide from a water-containing organic substance comprising a dewatering process for dewatering a material, a moisture adjustment process for removing the moisture from the dewatered cake, and a carbonization process for continuously carbonizing the moisture adjusted material.

2. A method as claimed in Claim 1 wherein said moisture adjustment process comprises mixing the carbide produced by said carbonization process into the cake to remove the moisture therefrom.

3. A method as claimed in Claim 1 wherein said dewatering process employs a pressing machine.

4. A method as claimed in Claim 3 wherein said dewatering process employs a series of first and second dewatering means.

5. A method as claimed in Claim 1 wherein said carbonization process employs a furnace mounted rotatable and having an inner tapered configuration, said furnace comprising an inlet and an outlet for the material, said inlet being larger in diameter than said outlet.

6. A method as claimed in Claim 1 wherein the material from said moisture adjustment process is granulated and thereafter fed to said carbonization process for continuous carbonization.

7. A method as claimed in Claim 1 or 2 wherein said dewatering process is for lowering the moisture percentage of the unprocessed material having 92% to 94% to the level of 65% to 68%, said moisture adjustment process is for further lowering the moisture to approximately 45%, and said carbonization process is for continuously carbonizing said moisture adjusted material.

8. A method as claimed in Claims 1 to 7 wherein the material to be carbonized is lees of wine, spirits, beer or a sludge cake.
